**Europäisches Patentamt**

**European Patent Office**

**Office européen des brevets**

(19)

(11) Veröffentlichungsnummer: **0 316 560 B1**

# EUROPÄISCHE PATENTSCHRIFT

(12)

(45) Veröffentlichungstag der Patentschrift: **08.01.92**

(51) Int. Cl.5: **A01B 73/04**

(21) Anmeldenummer: **88116385.1**

(22) Anmeldetag: **04.10.88**

(54) **Landwirtschaftliche Arbeitsmaschine mit hochklappbaren Werkzeugträgern.**

(30) Priorität: **20.11.87 DE 3739305**

(43) Veröffentlichungstag der Anmeldung:
**24.05.89 Patentblatt 89/21**

(45) Bekanntmachung des Hinweises auf die
Patenterteilung:
**08.01.92 Patentblatt 92/02**

(84) Benannte Vertragsstaaten:
**AT BE CH DE FR IT LI NL SE**

(56) Entgegenhaltungen:
**GB-A- 2 057 831**
**US-A- 4 249 616**
**US-A- 4 316 511**
**US-A- 4 341 610**

**Prospekt der Fa. Deutz-Fahr mit Druckvermerk 9148823 (printed in W. Germany)**

(73) Patentinhaber: **CLAAS SAULGAU GMBH**
**Postfach 1154**
**W-7968 Saulgau(DE)**

(72) Erfinder: **Deni, Franz**
**Bergstrasse 14**
**W-7968 Saulgau-Bogenweiler(DE)**

## Beschreibung

Die Erfindung bezieht sich auf eine landwirtschaftliche Maschine mit hochklappbaren Werkzeugträgern nach dem Oberbegriff des Anspruches 1.

Eine Maschine dieser Gattung ist zum Beispiel durch den Prospekt der Fa. Deutz-Fahr mit Druckvermerk 9148823 (printed in West Germany-8702) betreffend Kreiselheuwerbungsmaschinen bekannt geworden. Bei der hier ersichtlichen Ausführung ist ein schwenkbarer Riegel vorhanden, der mit Abstand von dem Mantel eines Hubzylinders an diesen gelagert ist. An seinem freien Ende ist er mit einem Hebelarm eines Werkzeugträgers in der Transportstellung verbindbar. Beim Ausfall des hydraulischen Druckes im Hubzylinder durch eine Störung oder Fehlbetätigung muß der Riegel sehr hohe Kräfte, die durch Massenkräfte entstehen, aufnehmen und auf den Hubzylinder übertragen. Der Hubzylinder muß dadurch hohe Biegekräfte aufnehmen, für die er bestimmungsgemäß nicht gebaut ist.

Dieser wesentliche Nachteil der bekanntgewordenen Konstruktion soll durch die Erfindung vermieden werden. Ein weiterer Vorteil soll für ein sicheres Absenken des hochgeklappten Werkzeugträgers sorgen, auch für den Fall, daß die Maschine auf unebenem Gelände schrägsteht.

Die Verriegelung der Transportstellung erfolgt entsprechend den kennzeichnenden Merkmalen des Anspruches 1 völlig biegemomentenfrei für den Hubzylinder. Weitere erfindungswichtige Merkmale sind in den Ansprüchen 2 bis 5 offenbart. Im Anspruch 6 wird eine Einrichtung aufgezeigt, die es ermöglicht, auch bei schrägstehender Maschine den hochgeklappten Werkzeugträger sicher abzusenken.

Am Beispiel einer Kreiselheumaschine mit 4 Kreiseln, von denen die beiden äußeren hochklappbar sind, wird die Erfindung erläutert.

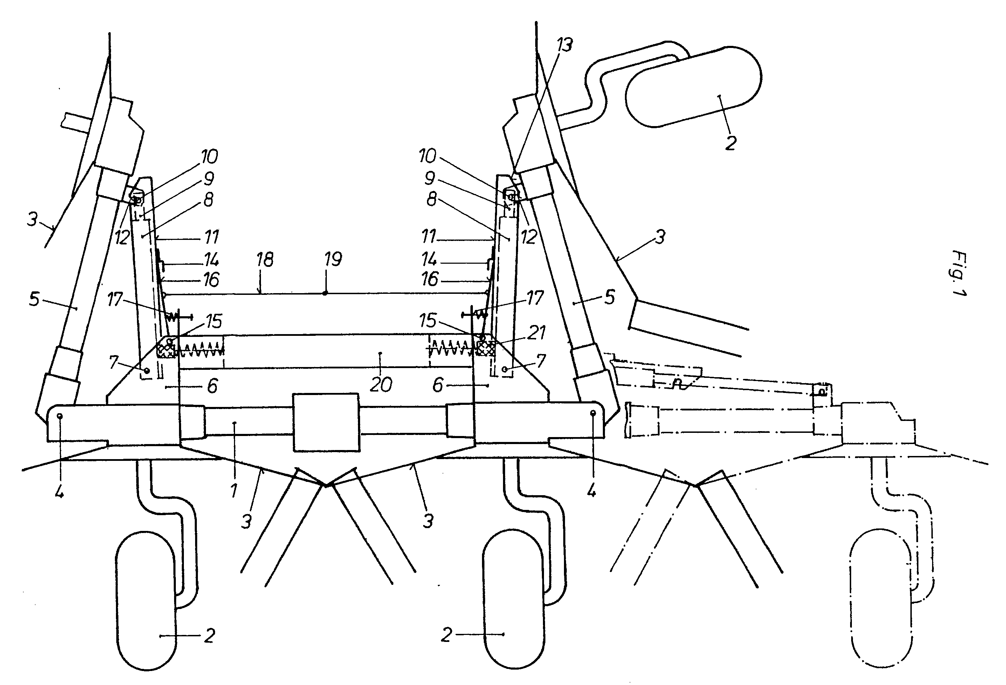

Fig. 1     zeigt eine Kreiselheumaschine von hinten, die beiden äußeren Werkzeugträger hochgeklappt,

Fig. 2     zeigt den gleichen Gegenstand in Teilansicht, den rechten Werkzeugträger in Arbeitsstellung.

Die Maschine hat einen Hauptrahmen (1), der von Laufrädern (2) getragen wird und besitzt 2 Kreisel (3). Um einen in Fahrtrichtung liegenden Bolzen (4) sind beiderseits hochklappbare Werkzeugträger (5) gelagert, die ihrerseits Laufräder (2) und nur teilweise gezeichnete Kreisel (3) tragen. An dem Hauptrahmen (1) sind Tragplatten (6) befestigt, die eine in Fahrtrichtung liegende Drehachse (7) besitzen. An der Drehachse (7) ist ein einfach wirkender Hubzylinder (8) schwenkbar gelagert, der eine Kolbenstange (9) mit einem Anlenkbolzen (10) besitzt. Der Anlenkbolzen (10) stellt eine Verbindung zwischen der Kolbenstange (9) und dem Werkzeugträger (5) her. Der Hubzylinder (8) wird von einem U-förmig ausgebildeten Riegel (11) überdeckt. Er ist um die Drehachse (7) schwenkbar gelagert und besitzt nahe seinem freien Ende eine nach unten offene Nute (12) und an seinem Ende eine Schrägfläche (13). Auf seinem Rücken hat der Riegel (11) eine zur Drehachse (7) hin offene Tasche (14). An den Tragplatten (6) sind mittels Bolzen (15) Klappen (16) drehbar gelagert, die mittels Druckfedern (17) in Richtung auf die Riegel (11) gedrückt werden.

Mittels eines Seilzuges (18), der bei Punkt (19) zum Schlepper geführt wird, wird einerseits der Ausschlag der Klappen (16) nach außen begrenzt und können die Klappen (16) andererseits vom Schlepper aus willkürlich gegen die Wirkung der Druckfedern (17) nach innen bewegt werden. In den Tragplatten (6) und einem sie verbindenden Querträger (20) sind gefederte Anschläge (21) in einem Abstand von der Drehachse (7) gelagert. Durch ein Fenster im Rücken des Riegels (11) können die Anschläge (21) durchtreten und mit Druck auf den Mantel des Hubzylinders (8) einwirken, wenn dessen Kolbenstange (9) eingefahren ist und sich der Hubzylinder (8) in einer etwa senkrechten Stellung befindet.

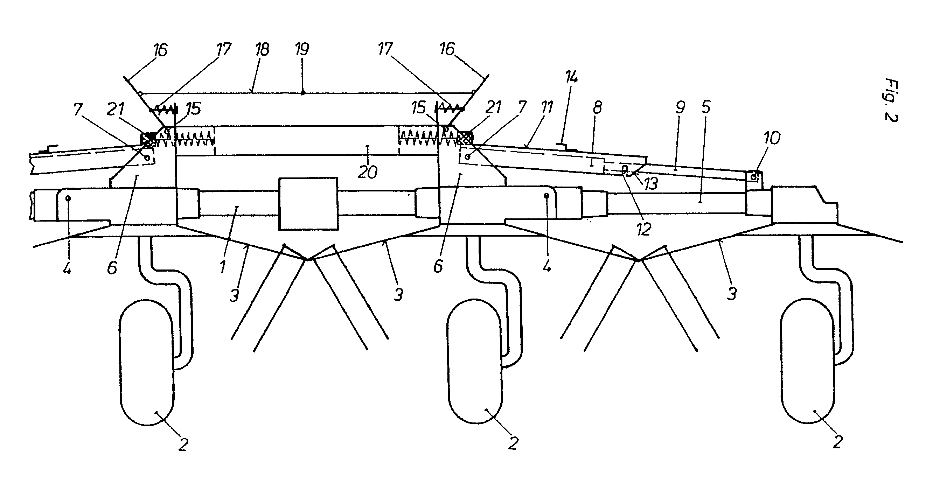

In der Arbeitsstellung ist der Werkzeugträger (5), wie in Fig. 2 gezeigt, abgesenkt. Die Kolbenstange (9) des Hubzylinders (8) ist ausgefahren. Der Riegel (11) liegt lose auf dem Hubzylinder (8) auf. Die Klappe (16) nimmt ihre äußerste Stellung ein.

Zum Transport soll der Werkzeugträger (5) hochgeklappt werden. Der Hubzylinder wird unter Druck gesetzt. Die Kolbenstange (9) wird eingezogen. Dabei klappt der Werkzeugträger um den Bolzen (4). Kurz vor Erreichen der Hochlage berührt der Rücken des Riegels (11) das freie Ende der Klappe (16). Dieses Ende schiebt sich dabei in die Tasche (14) ein, so daß in der Hochlage der Riegel (11) formschlüssig mit der Klappe (16) verbunden ist. Ebenfalls kurz vor Erreichen der Hochlage läuft der Anlenkbolzen (10) mit seinen freien Enden auf die Schrägfläche (13) auf und hebt den Riegel (11) dadurch so weit an, daß in der Hochlage die Nute (12) unter Einwirkung der Druckfeder (17) über die freien Enden des Anlenkbolzens (10) geschoben wird. Die Kolbenstange (9) und mit ihr der Werkzeugträger (5) sind dadurch verriegelt.

Zum Ablassen des Werkzeugträgers werden mittels des Seilzuges (18,19) die Klappen (16) und mit ihnen der Riegel (11) nach innen gezogen. Der Anlenkbolzen (10) kommt dadurch von der Nute (12) frei. Der Hubzylinder (8) kann jetzt drucklos abgesenkt werden, wobei die Abwärtsbewegung durch den auf den Mantel des Hubzylinders (8) drückenden gefederten Anschlag (21) unterstützt wird.

## Patentansprüche

1. Landwirtschaftliche Arbeitsmaschine zum Anbau an Schlepper mit zum Transport über eine Kolben-Zylinder-Einheit (8, 9) hochklappbaren Werkzeugträgern (5) und einer einen schwenkbaren Riegel (11) aufweisenden mechanischen Verriegelung für die Transportstellung, dadurch gekennzeichnet, daß der Riegel (11) um einen am Maschinenrahmen (1) für die Anlenkung des Hubzylinders (8) der Kolben-Zylindereinheit (8, 9) vorgesehenen Anlenkpunkt (7) schwenkbar gelagert ist und an seinem der Kolbenstange (9) der Kolben-Zylindereinheit (8, 9) zugewandten Ende eine Nute (12) aufweist, die bei eingefahrener Kolbenstange (9) einen Anlenkbolzen (10), der Kolbenstange (9) und Werkzeugträger (5) verbindet, umgreifen kann.

2. Landwirtschaftliche Arbeitsmaschine nach Anspruch 1, dadurch gekennzeichnet, daß der Riegel (11) bei eingefahrener Kolbenstange (9) von einer am Maschinenrahmen (1) über die Kraft einer Feder (17) in Richtung auf den Anlenkbolzen (10) der Kolbenstange (9) schwenkbar gelagerten Klappe (16) beaufschlagt ist.

3. Landwirtschaftliche Arbeitsmaschine nach Anspruch 2, dadurch gekennzeichnet, daß das freie Ende der gefederten Klappe (16) bei Einfahren der Kolbenstange (9) in eine zum Anlenkpunkt (7) hin offene Tasche (14) an der Oberseite des Riegels (11) eingreifen kann.

4. Landwirtschaftliche Arbeitsmaschine nach den Ansprüchen 2 und 3, dadurch gekennzeichnet, daß die gefederte Klappe (16) durch Seilzug (18, 19) oder dergleichen vom Schlepper aus willkürlich zurückziehbar ist, wodurch bei eingefahrener Kolbenstange (9) der Riegel (11) von der Kolbenstange (9) abhebbar und so die Verriegelung zwischen Nute (12) im Riegel (11) und dem Anlenkbolzen (10) der Kolbenstange (9) aufhebbar ist.

5. Landwirtschaftliche Arbeitsmaschine nach den Ansprüchen 2 bis 4, dadurch gekennzeichnet, daß der Anlenkpunkt (15) für die gefederte Klappe (16) in hochgeschwenkter Transportstellung des Werkzeugträgers (5) zwischen dem Anlenkpunkt (7) des Hubzylinders (8) und dem Anlenkbolzen (10) der Kolbenstange (9) und außerhalb deren Verbindungslinie liegt.

6. Landwirtschaftliche Arbeitsmaschine nach einem der Ansprüche 1 bis 5, dadurch gekennzeichnet, daß der Mantel des Hubzylinders (8) vor Erreichen der eingefahrenen Stellung der Kolbenstange (9) in Wirkverbindung mit einem gefederten Anschlag (21) bringbar ist, der den Hubzylinder (8) in Richtung eines Zurückschwenkens des Werkzeugträgers (5) in eine abgesenkte Arbeitsstellung beaufschlagt.

## Claims

1. An agricultural implement for attachment to tractors, comprising tool carriers (5) which can be swung up for transportation purposes by way of a piston-cylinder unit (8, 9), and a mechanical locking arrangement for the transportion position, which has a pivotable locking bar (11), characterised in that the locking bar (11) is mounted pivotably about a mounting point (7) provided on the machine frame (1) for mounting of the lift cylinder (8) of the piston-cylinder unit (8, 9), and at its end towards the piston rod (9) of the piston-cylinder unit (8, 9) has a slot (12) which, when the piston rod (9) is retracted, can embrace a connecting pin (10) which connects the piston rod (9) and the tool carrier (5).

2. An agricultural implement according to claim 1 characterised in that, when the piston rod (9) is retracted, the locking bar (11) is acted upon by a flap (16) which is mounted on the machine frame (1) pivotably towards the connecting pin (10) of the piston rod (9) by way of the force of a spring (17).

3. An agricultural implement according to claim 2 characterised in that, upon retraction of the piston rod (9), the free end of the sprung flap (16) can engage into a pocket (14), which is open towards the mounting point (7), at the top side of the locking bar (11).

4. An agricultural implement according to claims 2 and 3 characterised in that the sprung flap (16) can be retracted at will from the tractor by a cable arrangement (18, 19) or the like, whereby when the piston rod (9) is retracted, the locking bar (11) can be lifted away from the piston rod (9) and thus the locking action between the slot (12) in the locking bar (11) and the connecting pin (10) of the piston rod (9) can be released.

5. An agricultural implement according to claims 2 to 4 characterised in that the mounting point (15) for the sprung flap (16), in the upwardly pivoted transportation position of the tool carrier (5), lies between the mounting point (7) of the lift cylinder (8) and the connecting pin (10) of the piston rod (9) and outside the line joining same.

6. An agricultural implement according to one of claims 1 to 5 characterised in that, before the retracted position of the piston rod (9) is reached, the casing of the lifting cylinder (8) can be brought into operative relationship with a sprung abutment (21) which urges the lift cylinder (8) in the direction of the tool carrier (5) pivoting back into a lowered operative position.

**Revendications**

1. Machine agricole destinée à être attelée à des tracteurs, et comprenant des supports d'outillage (5) relevables par pivotement en vue du transport, par l'intermédiaire d'un groupe à piston et cylindre (8, 9), ainsi qu'un système de verrouillage mécanique pour la position de transport, muni d'un verrou pivotant (11), caractérisée par le fait que le verrou (11) est monté pivotant autour d'un point d'articulation (7) prévu, sur le châssis (1) de la machine, pour l'articulation du vérin de levage (8) du groupe à piston et cylindre (8, 9), ledit verrou présentant, à son extrémité tournée vers la tige (9) du piston du groupe à piston et cylindre (8, 9), une gorge (12) qui peut emprisonner, lorsque la tige (9) du piston est rétractée, une cheville d'articulation (10) reliant ladite tige (9) du piston et le support d'outillage (5).

2. Machine agricole selon la revendication 1, caractérisée par le fait que, lorsque la tige (9) du piston est rétractée, le verrou (11) est soumis à l'action d'un élément rabattable (16) monté à pivotement sur le châssis (1) de la machine, par la force d'un ressort (17), en direction de la cheville d'articulation (10) de ladite tige (9) du piston.

3. Machine agricole selon la revendication 2, caractérisée par le fait que, lors de la rétraction de la tige (9) du piston, l'extrémité libre de l'élément rabattable (16) amorti élastiquement peut pénétrer dans un logement (14), ouvert en direction du point d'articulation (7), à la face supérieure du verrou (11).

4. Machine agricole selon les revendications 2 et 3, caractérisée par le fait que l'élément rabattable (16) amorti élastiquement peut être rappelé à volonté à partir du tracteur, par l'intermédiaire d'un système de traction par câble (18, 19) ou système similaire, de sorte que, lorsque la tige (9) du piston est rétractée, le verrou (11) peut être soulevé à l'écart de cette tige (9) de piston, ce qui permet de supprimer le verrouillage entre la gorge (12) pratiquée dans ledit verrou (11), et la cheville d'articulation (10) de ladite tige (9) de piston.

5. Machine agricole selon les revendications 2 à 4, caractérisée par le fait que, dans la position de transport dans laquelle le support d'outillage (5) a pivoté vers le haut, le point d'articulation (15) destiné à l'élément rabattable (16) amorti élastiquement se trouve entre le point d'articulation (7) du vérin de levage (8) et la cheville d'articulation (10) de la tige (9) du piston, et à l'extérieur de la ligne reliant ces derniers.

6. Machine agricole selon l'une des revendications 1 à 5, caractérisée par le fait que, avant que la position rétractée de la tige (9) du piston soit atteinte, l'enveloppe du vérin de levage (8) peut être mise en liaison interactive avec une butée (21) amortie élastiquement qui agit, sur ledit vérin de levage (8), dans le sens d'un pivotement rétrograde du support d'outillage (5) jusqu'à une position de travail abaissée.

Fig. 1

Fig. 2